# EUROPEAN PATENT SPECIFICATION

(11) **EP 3 233 308 B1**
(45) Date of publication and mention of the grant of the patent: **20.09.2023**
(21) Application number: 15877286.3
(22) Date of filing: 15.10.2015
(51) Int. Cl.: B06B 1/16, F16F 7/10, B64C 27/00

(54) **VARIABLE AMPLITUDE FORCE GENERATOR**
AMPLITUDENVERÄNDERLICHER KRAFTERZEUGER
GÉNÉRATEUR DE FORCE D'AMPLITUDE VARIABLE

(30) Priority: 16.12.2014 US 201462092557 P
(43) Date of publication of application: 25.10.2017
(73) Proprietor: Sikorsky Aircraft Corporation, Stratford, CT 06615 (US)
(72) Inventor: KAYE, Jordan Alex, Shelton, Connecticut 06484 (US); CAPPELLI, Marcus D., Shelton, Connecticut 06484 (US); MONICO, Michael, North Haven, Connecticut 06473 (US)
(74) Representative: Schmitt-Nilson Schraud Waibel Wohlfrom Patentanwälte Partnerschaft mbB
(86) International application number: PCT/US2015/055743
(87) International publication number: WO 2016/111733

(56) References cited:
- WO-A1-00/04227
- WO-A1-2008/133614
- US-A- 2 309 172
- US-A- 4 241 615
- US-A- 4 935 651
- US-A1- 2002 100 338
- US-A1- 2005 076 729
- US-A1- 2010 307 877
- US-B2- 7 064 655

## Description

The subject matter disclosed herein relates to force generators and, more particularly, to variable amplitude force generators.

In rotary aircraft, such as single-rotor helicopters or helicopters with coaxial, counter-rotating main rotors, the rotors rotate about the airframe and generate vibrations. These vibrations as well as other types of vibrations (e.g., those caused by damage) are transmitted to the airframe and can lead to uncomfortable flight conditions. Thus, it is often desirable that at least a portion of the generated vibrations be mitigated or reduced. Such vibration mitigation or reduction is often achieved by providing rotary aircraft with force generator systems. For example, WO 2008/133614 A1 discloses a vibration attenuator for an aircraft having at least one weight mounted in a rotating system of a rotor hub of the aircraft, each weight being rotatable about an axis of rotation of the hub relative to the hub and to each other weight. Drive means are provided for rotating each weight about the axis of rotation at a selected speed for creating oscillatory shear forces that oppose and attenuate rotor-induced vibrations having a selected frequency.

Current force generator systems use fixed weights and are designed to accelerate the weights in a given direction in order to effectively interfere with the vibrations and in so doing to achieve the desired vibration mitigation or reduction. However, these current force generator systems are typically designed to target only a single frequency. Thus, if a current force generator system is to be used to address a vibration frequency for which it was not designed, it must be adapted to the new vibration frequency.

According to one aspect of the invention, a vibration reduction system, including plural force generators disposed about an airframe of an aircraft and a controller, comprises the features of claim 1.

Each force generator includes a hub, which is rotatable about an axis thereof, an elongate member coupled to the hub such that the elongate member is rotatable with the hub and extends radially outwardly away from the hub and the axis along a radial dimension defined with respect to the axis and a mass, which is movably disposed along the elongate member and is adjustable to multiple radial mass positions relative to the hub.

In addition to one or more of the features within the explanatory example described above, or as an alternative, the hub includes a cylindrical body and the axis is a central longitudinal axis of the cylindrical body.

In addition to one or more of the features within the explanatory example described above, or as an alternative, the elongate member extends radially outwardly from a radial periphery of the hub.

In addition to one or more of the features within the explanatory example described above, or as an alternative, the elongate member extends perpendicularly with respect to the axis.

In addition to one or more of the features within the explanatory example described above, or as an alternative, the actuator includes a rotary actuator which rotates the elongate member to move the mass relative to the hub.

In addition to one or more of the features within the explanatory example described above, or as an alternative, the actuator includes a linear actuator which moves the mass relative to the hub along the elongate member.

In addition to one or more of the features within the explanatory example described above, or as an alternative, the actuator is disposed within the elongate member.

In addition to one or more of the features described above, or as an alternative, the controller further changes a rotational speed of the hub and moves the mass to change the from the one vibration frequency having the amplitude to another vibration frequency having another amplitude.

According to another aspect, an aircraft according to claim 8 is provided.

In addition to one or more of the features described above, or as an alternative, a first frequency of the vibrations is a design frequency of the airframe system generated by rotor rotation.

In addition to one or more of the features described above, or as an alternative, a second frequency of the vibrations is a non-design frequency of the airframe system generated by aircraft damage, and the controller is configured to adjust the rotation of the hub and a radial location of the mass to mitigate the second (non-design) frequency.

These and other advantages and features will become more apparent from the following description taken in conjunction with the drawings.

### BRIEF DESCRIPTION OF THE DRAWINGS

The subject matter, which is regarded as the invention, is particularly pointed out and distinctly claimed in the claims at the conclusion of the specification. The foregoing and other features, and advantages of the invention are apparent from the following detailed description taken in conjunction with the accompanying drawings in which:
FIG. 1 is a perspective view of an aircraft in accordance with embodiments;
FIG. 2 is a schematic diagram of a drive system of the aircraft of FIG. 1 in accordance with embodiments;
FIG. 3 is a side view of a force generator in accordance with an example serving to explain certain features of the invention ;
FIG. 4 is a schematic diagram illustrating a control system for the force generator of FIG. 3; and
FIG. 5 is a flow diagram illustrating a method of controlling a system of force generators for an aircraft.

The detailed description explains embodiments of the invention, together with advantages and features, by way of example with reference to the drawings.

### DETAILED DESCRIPTION OF THE INVENTION

As will be described below as an example serving to explain certain features of the invention, a force generator can be used to address a vibration frequency for which it was not designed by changing operational speeds of the force generators of the current force generator systems. However, the change can result in an amplitude of the generated force being reduced with corresponding reductions in efficiencies or effectiveness of the systems. A force generator is provided and has the capability of being controlled such that the weights of the force generator can move radially inward or outward. Thus, a moment arm of the force generator can be changed to allow, for example, higher amplitude forces to be generated even if the rotational speed of the force generator is reduced. This will allow the force generator to maintain efficiency at different rotational velocities and will allow the force generator to mitigate or reduce vibrations at its design frequency and to mitigate or reduce vibrations at multiple frequencies other than its design frequency. This can be particularly useful in a case where the aircraft has been damaged and the damage causes non-design frequency vibrations.

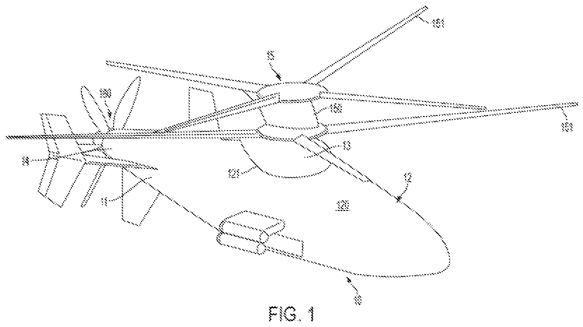

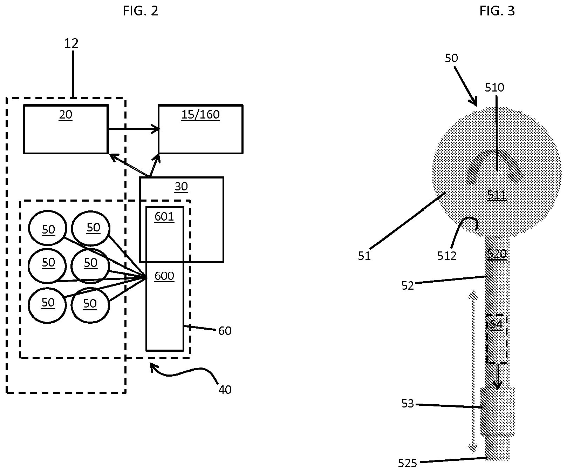

With reference to FIGS. 1 and 2, an aircraft 10 is provided. The aircraft 10 may be a helicopter 11 or another similar type of rotary aircraft. As shown in FIG. 1, the aircraft 10 includes an airframe 12, which is formed to define a cabin 120 and which includes a main section 121, a pylon section 13 and a tail section 14. The pylon section 13 is supportive of a main rotor section 15 that includes a main rotor shaft 150 and main rotors 151, which are coupled to the main rotor shaft 150. The tail section 14 is supportive of a propeller assembly 160. The cabin 120 is sized to accommodate a pilot and, in some cases, additional crewmen and/or passengers as well as control and navigational features.

The aircraft 10 further includes a drive system 20, a flight computer 30 and a vibration reduction system 40. The drive system 20 is disposed within the airframe 12 and is coupled to the main rotor section 15 and the propeller assembly 160 to drive respective rotations of the main rotors 151 and the propeller assembly 160 relative to the airframe 12. The drive system 20 may include an engine and a transmission system including one or more gearboxes. In such cases, the engine generates power to drive the respective rotations of the main rotors 151 and the propeller assembly 160 and the transmission system transmits the generated power to the main rotor section 15 and the propeller assembly 160. The flight computer 30 is coupled to the drive system 30, the main rotor section 15 and the propeller assembly and is configured to control various operations of each.

As shown in FIG. 1, the aircraft 10 may be provided as a helicopter 11 having first and second coaxial, counter-rotating main rotors with the propeller assembly 160. It will be understood that this is not required, however, and that the description provided herein is applicable for any aircraft or ground based turbine. By way of example, a conventional single rotor helicopter could be used having a tail rotor which is not an auxiliary propeller.

The vibration reduction system 40 includes force generators 50 that are disposed on or about the airframe 12 and a controller 60 that may be provided as a stand-alone feature 600 or as a sub-component 601 of the flight computer 30. While shown with plural force generators 50, it is understood that a single force generator 50 could be used in other aspects, and where plural force generators 50 are used, the number could be other than the six shown.

With reference to FIG. 3, at least one of the force generators 50 includes a hub 51, an elongate member 52 and a mass 53. The hub 51 is fixable to the airframe 12 at a given location and is rotatable about an axis 510 thereof. In accordance with embodiments, the hub 51 may include or be provided as a cylindrical body 511 having a radial periphery 512 and the axis 510 may be a central longitudinal axis of the cylindrical body 511. The elongate member 52 includes a shaft 520 and is coupled at an end of the shaft 520 to the hub 51 such that the elongate member 52 is rotatable with the hub 51 and extends radially outwardly away from the axis 510 of the hub 51 along a radial dimension defined substantially perpendicular to the axis 510. In accordance with embodiments, the elongate member 52 extends radially outwardly from the radial periphery 512 of the hub 51 and perpendicularly with respect to the axis 510. The mass 53 is movably disposed along the shaft 520 of the elongate member 52 to assume multiple radial mass positions relative to the hub 51. These multiple radial mass positions may be defined anywhere along the shaft 520 between the periphery 512 of the hub 51 and a distal end 525 of the shaft 520 of the elongate member 52.

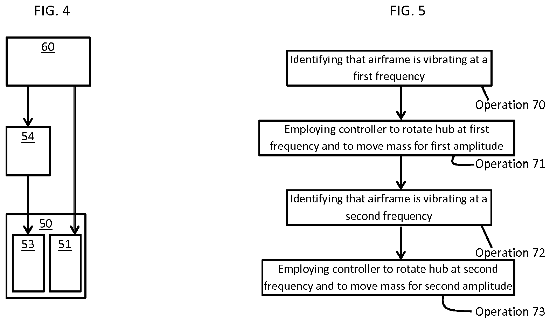

With continued reference to FIG. 3 and with additional reference to FIG. 4, the one or more of the force generators 50 further include an actuator 54. The actuator 54 may be external from the elongate member 52 or disposed within the shaft 520 of the elongate member 52 and coupled to the mas 53. By way of such coupling, the actuator 54 is configured to drive a movement of the mass 53 along the shaft 520. In accordance with alternative embodiments, the actuator 54 may be a rotary actuator or a linear actuator. In the former case, the mass 53 may be secured to the shaft 520 via threading whereby rotation of the rotary version of the actuator 54 causes rotation of the mass 53 about the shaft 520, which is converted into linear motion by the threading. Where the actuator 54 is a linear actuator, actuation of the actuator 54 directly causes linear motion of the mass 53.

The controller 60 is coupled to the one or more of the force generators 50 and is thus configured to control a movement of the mass 53 along the shaft 520 of the elongate member 52 and to drive the rotation of the hub 51 about the axis 510 at a frequency (or frequencies) that is (or are) in line with a frequency (or frequencies) currently affecting the airframe 12. In doing so, the controller 60 operates the one or more of the force generators 50 to mitigate or reduce vibrations of the airframe 12. In accordance with embodiments, these vibrations may be caused by at least one or more of vibrations generated by the respective rotations of the main rotors 151 and the propeller assembly 160 and/or by damage to the aircraft 10 or the airframe 12.

As shown in FIG. 2 and, in accordance with embodiments, the vibration reduction system 40 may include six force generators 50 disposed on or about the airframe 12 to mitigate or reduce the vibrations of the airframe 12 in six directions. In addition, a frequency of the vibrations may be a design frequency of the vibration reduction system 40 or a non-design frequency of the vibration reduction system 40. Thus, the vibration reduction system 40 may be operated to mitigate or reduce vibrations of the airframe 12 at a given frequency for which the force generators 50 are designed (i.e., the frequency of vibrations caused by the respective rotations of the main rotors 151 and the propeller assembly 160) or to mitigate or reduce vibrations of the airframe 12 at frequencies the force generators 50 are not designed to address (i.e., the frequency of vibrations caused by damage to the airframe 12). In the latter case, the controller 60 may be employed to move the masses 53 of the force generators 50 along the corresponding elongate members 52 in order to change a moment arm of the force generator 50 to allow, for example, higher amplitude forces to be generated even if the rotational speed of the force generator 50 is reduced and to allow the force generators 50 to maintain efficiency at different rotational velocities.

It will be understood that although each of the force generators 50 of a given vibration reduction system 40 of an aircraft 10 can be operated similarly by the controller 60, this is not required. In some cases, the controller 60 operates each force generator 50 differently such that one or more force generators 50 can be used to mitigate or reduce vibrations of a first frequency and one or more other force generators 50 can be used to mitigate or reduce vibrations of a second frequency. Thus, in an exemplary case of an aircraft 10 having six force generators 50 and an airframe 12 that is subject to vibrations of a first frequency caused by the respective rotations of the main rotors 151 and the propeller assembly 160 and to vibrations of a second frequency caused by damage, the controller 60 can operate, say, three of the force generators 50 to mitigate or reduce the vibrations of the first frequency and the other three force generators 50 to mitigate or reduce the vibrations of the second frequency.

With reference to FIG. 5, a method of controlling the vibration reduction system 40 is provided. The method includes identifying that the airframe 12 is vibrating at a first frequency (operation 70) and employing the controller 60 to rotate the hub 51 about the axis 510 of a given force generator 50 at the first frequency and to drive a movement of the mass 53 along the elongate member 52 in order to achieve a desired amplitude of force generation for the force generator 50 (operation 71). This should serve to mitigate or reduce the vibration of the airframe 12 at the first frequency. The method further includes identifying that the airframe 12 is vibrating at a second frequency (operation 72) and employing the controller 60 to rotate the hub 51 about the axis 510 of the given force generator 50 at the second frequency and to drive a movement of the mass 53 along the elongate member 52 in order to achieve a new desired amplitude of force generation for the force generator 50 (i.e., a second amplitude) (operation 73). This should serve to mitigate or reduce the vibration of the airframe 12 at the second frequency.

In addition and, as noted above, the first frequency of operation 70 may include one or more first frequencies and the controller 60 may be employed in operation 71 to control one or more force generators 50 to mitigate or reduce each of the one or more first frequencies. Similarly, the second frequency of operation 72 may include one or more second frequencies and the controller 60 may be employed in operation 73 to control one or more force generators 50 to mitigate or reduce each of the one or more second frequencies.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the scope of the invention, as defned by the appended claims. Additionally, while various embodiments of the invention have been described, it is to be understood that aspects of the invention may include only some of the described embodiments. Accordingly, the invention is not to be seen as limited by the foregoing description, but is only limited by the scope of the appended claims.

## Claims

1. A vibration reduction system (40) including plural force generators (50) and a controller (60),
wherein each of the plural force generators (50) comprises:
a hub (51), which is rotatable about an axis thereof;
an elongate member (52) coupled to the hub (51) such that the elongate member (52) is rotatable with the hub (51) and extends radially outwardly away from the hub (51) and the axis along a radial dimension defined with respect to the axis; and
a mass (53), which is movably disposed along the elongate member (52) and is adjustable to multiple radial mass positions relative to the hub; and
an actuator (54) to drive a movement of the mass (53),
wherein the controller (60) is coupled to each of the force generators (50) and is thus configured:
to control the actuator (54) to control a movement of the mass (53) along the elongate member (52) to achieve a desired amplitude of force generation for the respective force generator (50), and
to drive a rotation of the hub (51) about the axis for each force generator (50) at at least one frequency that is in line with at least one frequency currently affecting the airframe (12) to mitigate or reduce at least one of vibrations generated by rotor (151, 160) rotation and/or by aircraft damage;
**characterised in that:**
said plural force generators (50) are disposed about an airframe (12) of an aircraft (10); and
each hub (51) is fixed to the airframe (12) at a given location.

2. The vibration reduction system (40) according to claim 1, wherein the controller (60) is configured to further change a rotational speed of the hub (51) and to move the mass (53) to change the force generation from the one vibration frequency having the amplitude to another vibration frequency having another amplitude.

3. The vibration reduction system (40) according to claims 1 or 2, wherein the hub (51) comprises a cylindrical body (511) and the axis is a central longitudinal axis of the cylindrical body (511), the elongate member (52) extends radially outwardly from a radial periphery (512) of the hub (51), and the elongate member (52) extends perpendicularly with respect to the axis.

4. The vibration reduction system (40) according to claim 3, wherein the actuator (54) comprises a rotary actuator configured to rotate the elongate member (52) to move the mass (53) relative to the hub (51).

5. The vibration reduction system (40) according to claim 3, wherein the actuator (54) comprises a linear actuator configured to move the mass (53) relative to the hub (53) along the elongate member (52).

6. The vibration reduction system (40) according to claim 3, wherein the actuator (54) is disposed within the elongate member (52).

7. The vibration reduction system (40) according to any of claims 1 to 6, wherein the plural force generators (50) are disposed on the airframe (12) in plural directions.

8. An aircraft (10), comprising:
an airframe (12);
a rotor (151) disposed on the airframe (12);
a drive system (20) disposed within the airframe (12) and coupled to the rotor (151) to drive a rotation of the rotor (151) relative to the airframe (12); and
a vibration reduction system (40) according to any of claims 1 to 7.

9. The aircraft (10) according to claim 8, wherein a first frequency of the vibrations is a design frequency of the airframe (12) system generated by rotor (151, 160) rotation.

10. The aircraft (10) according to either of claims 8 or 9, wherein a second frequency of the vibrations is a non-design frequency of the airframe (12) system generated by aircraft damage, and the controller (60) is configured to adjust the rotation of the hub (51) and a radial location of the mass (53) to mitigate the second frequency.

11. A method of controlling the vibration reduction system (40) according to any of claims 1 to 7 including:
identifying that the airframe (12) is vibrating at at least one first frequency being a design frequency of the airframe (12) system generated by rotor (151, 160) rotation (operation 70); and
employing the controller (60) to rotate the hub (51) about the axis (510) of a given force generator (50) at the first frequency and to drive a movement of the mass (53) along the elongate member (52) in order to achieve a desired amplitude of force generation for the force generator (50) (operation 71),
to mitigate or reduce the vibration of the airframe (12) at the at least one first frequency; and
further identifying that the airframe (12) is vibrating at at least one second frequency (operation 72), and
employing the controller (60) to rotate the hub (51) about the axis (510) of the given force generator (50) at the second frequency, being a non-design frequency of the airframe system generated by aircraft damage, and to drive a movement of the mass (53) along the elongate member (52) in order to achieve a new desired amplitude of force generation for the force generator (50) (operation 73),
to mitigate or reduce the vibration of the airframe (12) at the at least one second frequency.

## Patentansprüche

1. Schwingungsreduktionssystem (40), das mehrere Krafterzeuger (50) und eine Steuerung (60) beinhaltet,
wobei jeder der mehreren Krafterzeuger (50) Folgendes umfasst:
eine Nabe (51), die um eine Achse davon drehbar ist;
ein längliches Element (52), das mit der Nabe (51) gekoppelt ist, so dass das längliche Element (52) mit der Nabe (51) drehbar ist und sich radial nach außen von der Nabe (51) und der Achse weg entlang eines radialen Maßes erstreckt, das in Bezug auf die Achse definiert ist; und
eine Masse (53), die bewegbar entlang des länglichen Elements (52) angeordnet und auf mehrere radiale Massenpositionen in Bezug auf die Nabe einstellbar ist; und
einen Aktuator (54), um eine Bewegung der Masse (53) anzutreiben,
wobei die Steuerung (60) mit jedem der Krafterzeuger (50) gekoppelt ist und somit konfiguriert ist, um:
den Aktuator (54) zu steuern, um eine Bewegung der Masse (53) entlang des länglichen Elements (52) zu steuern, um eine gewünschte Krafterzeugungsamplitude für den jeweiligen Krafterzeuger (50) zu erreichen, und
um eine Drehung der Nabe (51) um die Achse für jeden Krafterzeuger (50) mit mindestens einer Frequenz anzutreiben, die mit mindestens einer Frequenz übereinstimmt, die aktuell auf die Luftfahrzeugzelle (12) einwirkt, um mindestens eine der durch die Drehung des Rotors (151, 160) und/oder durch eine Beschädigung des Luftfahrzeugs erzeugten Schwingungen abzuschwächen oder zu reduzieren;
**dadurch gekennzeichnet, dass:**
die mehreren Krafterzeuger (50) um eine Luftfahrzeugzelle (12) eines Luftfahrzeugs (10) angeordnet sind; und jede Nabe (51) an einer bestimmten Stelle an der Luftfahrzeugzelle (12) befestigt ist.

2. Schwingungsreduktionssystem (40) nach Anspruch 1, wobei die Steuerung (60) konfiguriert ist, um ferner eine Drehzahl der Nabe (51) zu ändern und die Masse (53) zu bewegen, um die Krafterzeugung von der einen Schwingungsfrequenz, die die Amplitude aufweist, in eine andere Schwingungsfrequenz mit einer anderen Amplitude zu ändern.

3. Schwingungsreduktionssystem (40) nach Anspruch 1 oder 2, wobei die Nabe (51) einen zylindrischen Körper (511) umfasst und die Achse eine zentrale Längsachse des zylindrischen Körpers (511) ist, wobei sich das längliche Element (52) von einem radialen Umfang (512) der Nabe (51) radial nach außen erstreckt, und sich das längliche Element (52) senkrecht zu der Achse erstreckt.

4. Schwingungsreduktionssystem (40) nach Anspruch 3, wobei der Aktuator (54) einen Drehaktuator umfasst, der konfiguriert ist, um das längliche Element (52) zu drehen, um die Masse (53) in Bezug auf die Nabe (51) zu bewegen.

5. Schwingungsreduktionssystem (40) nach Anspruch 3, wobei der Aktuator (54) einen linearen Aktuator umfasst, der konfiguriert ist, um die Masse (53) in Bezug auf die Nabe (53) entlang des länglichen Elements (52) zu bewegen.

6. Schwingungsreduktionssystem (40) nach Anspruch 3, wobei der Aktuator (54) innerhalb des länglichen Elements (52) angeordnet ist.

7. Schwingungsreduktionssystem (40) nach einem der Ansprüche 1 bis 6, wobei die mehreren Krafterzeuger (50) an der Luftfahrzeugzelle (12) in mehreren Richtungen angeordnet sind.

8. Luftfahrzeug (10), umfassend:
eine Luftfahrzeugzelle (12);
einen Rotor (151), der an der Luftfahrzeugzelle (12) angeordnet ist;
ein Antriebssystem (20), das innerhalb der Luftfahrzeugzelle (12) angeordnet und mit dem Rotor (151) gekoppelt ist, um eine Drehung des Rotors (151) in Bezug auf die Luftfahrzeugzelle (12) anzutreiben; und
ein Schwingungsreduktionssystem (40) nach einem der Ansprüche 1 bis 7.

9. Luftfahrzeug (10) nach Anspruch 8, wobei eine erste Frequenz der Schwingungen eine Auslegungsfrequenz des Systems der Luftfahrzeugzelle (12) ist, die durch die Drehung des Rotors (151, 160) erzeugt wird.

10. Luftfahrzeug (10) nach einem der Ansprüche 8 oder 9, wobei eine zweite Frequenz der Schwingungen nicht eine Auslegungsfrequenz des Systems der Luftfahrzeugzelle (12) ist, die durch eine Beschädigung des Luftfahrzeugs erzeugt wird, und die Steuerung (60) konfiguriert ist, um die Drehung der Nabe (51) und eine radiale Stelle der Masse (53) einzustellen, um die zweite Frequenz abzuschwächen.

11. Verfahren zum Steuern des Schwingungsreduktionssystems (40) nach einem der Ansprüche 1 bis 7, beinhaltend:
Identifizieren, dass die Luftfahrzeugzelle (12) mit mindestens einer ersten Frequenz schwingt, die eine Auslegungsfrequenz des Systems der Luftfahrzeugzelle (12) ist, die durch die Drehung des Rotors (151, 160) erzeugt wird (Vorgang 70); und
Einsetzen der Steuerung (60), um die Nabe (51) um die Achse (510) eines gegebenen Krafterzeugers (50) mit der ersten Frequenz zu drehen und eine Bewegung der Masse (53) entlang des länglichen Elements (52) anzutreiben, um eine gewünschte Krafterzeugungsamplitude für den Krafterzeuger (50) zu erreichen (Vorgang 71),
um die Schwingung der Luftfahrzeugzelle (12) bei der mindestens einen ersten Frequenz abzuschwächen oder zu reduzieren; und
ferner Identifizieren, dass die Luftfahrzeugzelle (12) mit mindestens einer zweiten Frequenz schwingt (Vorgang 72), und
Einsetzen der Steuerung (60), um die Nabe (51) um die Achse (510) des gegebenen Krafterzeugers (50) mit der zweiten Frequenz zu drehen, die nicht eine Auslegungsfrequenz des Luftfahrzeugzellensystems ist, die durch eine Beschädigung des Luftfahrzeugs erzeugt wird, und um eine Bewegung der Masse (53) entlang des länglichen Elements (52) anzutreiben, um eine neue gewünschte Krafterzeugungsamplitude für den Krafterzeuger (50) zu erreichen (Vorgang 73),
um die Schwingung der Luftfahrzeugzelle (12) bei der mindestens einen zweiten Frequenz abzuschwächen oder zu reduzieren.

## Revendications

1. Système de réduction des vibrations (40) comprenant plusieurs générateurs de force (50) et un dispositif de commande (60),
dans lequel chacun des multiples générateurs de force (50) comprend :
un moyeu (51), qui peut tourner autour d'un axe de celui-ci ;
un élément allongé (52) accouplé au moyeu (51) de telle sorte que l'élément allongé (52) peut tourner avec le moyeu (51) et s'étend radialement vers l'extérieur à partir du moyeu (51) et de l'axe le long d'une dimension radiale définie par rapport à l'axe ; et
une masse (53), qui est disposée de manière mobile le long de l'élément allongé (52) et est réglable à de multiples positions de masse radiales par rapport au moyeu ; et
un actionneur (54) pour entraîner un mouvement de la masse (53),
dans lequel le dispositif de commande (60) est accouplé à chacun des générateurs de force (50) et est ainsi configuré pour :
commander l'actionneur (54) pour commander un mouvement de la masse (53) le long de l'élément allongé (52) afin d'obtenir une amplitude souhaitée de génération de force pour le générateur de force respectif (50), et
entraîner une rotation du moyeu (51) autour de l'axe pour chaque générateur de force (50) à au moins une fréquence conforme à au moins une fréquence affectant couramment la cellule (12) pour atténuer ou réduire au moins une parmi les vibrations générées par la rotation du rotor (151, 160) et/ou les dommages survenus à l'aéronef ;
**caractérisé en ce que** :
lesdits multiples générateurs de force (50) sont disposés autour d'une cellule (12) d'un aéronef (10) ; et chaque moyeu (51) est installé sur la cellule (12) à un emplacement donné.

2. Système de réduction de vibrations (40) selon la revendication 1, dans lequel le dispositif de commande (60) est configuré pour modifier également une vitesse de rotation du moyeu (51) et pour déplacer la masse (53) pour faire passer la génération de force d'une fréquence de vibration ayant une amplitude à une autre fréquence de vibration ayant une autre amplitude.

3. Système de réduction des vibrations (40) selon la revendication 1 ou 2, dans lequel le moyeu (51) comprend un corps cylindrique (511) et l'axe est un axe longitudinal central du corps cylindrique (511), l'élément allongé (52) s'étend radialement vers l'extérieur à partir d'une périphérie radiale (512) du moyeu (51), et l'élément allongé (52) s'étend perpendiculairement à l'axe.

4. Système de réduction des vibrations (40) selon la revendication 3, dans lequel l'actionneur (54) comprend un actionneur rotatif configuré pour faire tourner l'élément allongé (52) pour déplacer la masse (53) par rapport au moyeu (51) .

5. Système de réduction des vibrations (40) selon la revendication 3, dans lequel l'actionneur (54) comprend un actionneur linéaire configuré pour déplacer la masse (53) par rapport au moyeu (53) le long de l'élément allongé (52).

6. Système de réduction des vibrations (40) selon la revendication 3, dans lequel l'actionneur (54) est disposé à l'intérieur de l'élément allongé (52).

7. Système de réduction des vibrations (40) selon l'une quelconque des revendications 1 à 6, dans lequel les multiples générateurs de force (50) sont disposés sur la cellule (12) dans plusieurs directions.

8. Aéronef (10), comprenant :
une cellule (12) ;
un rotor (151) disposé sur la cellule (12) ;
un système d'entraînement (20) disposé dans la cellule (12) et couplé au rotor (151) pour entraîner une rotation du rotor (151) par rapport à la cellule (12) ; et
un système de réduction des vibrations (40) selon l'une quelconque des revendications 1 à 7.

9. Aéronef (10) selon la revendication 8, dans lequel une première fréquence des vibrations est une fréquence de conception du système de cellule (12) générée par la rotation du rotor (151, 160).

10. Aéronef (10) selon l'une des revendications 8 ou 9, dans lequel une seconde fréquence des vibrations est une fréquence non de conception du système de la cellule (12) due à un dommage de l'aéronef, et le dispositif de commande (60) est configuré pour ajuster la rotation du moyeu (51) et un emplacement radial de la masse (53) afin d'atténuer la seconde fréquence.

11. Procédé de commande du système de réduction des vibrations (40) selon l'une quelconque des revendications 1 à 7 comprenant :
l'identification de la vibration de la cellule (12) à au moins une première fréquence en tant qu'une fréquence de conception du système de cellule (12) généré par la rotation du rotor (151, 160) (opération 70) ; et
l'utilisation du dispositif de commande (60) pour faire tourner le moyeu (51) autour de l'axe (510) d'un générateur de force donné (50) à la première fréquence et pour entraîner un mouvement de la masse (53) le long de l'élément allongé (52) afin d'obtenir une amplitude souhaitée de génération de force pour le générateur de force (50) (opération 71),
d'atténuer ou de réduire les vibrations de la cellule (12) à au moins une première fréquence ; et
l'identification également de la vibration de la cellule (12) à au moins une seconde fréquence (opération 72), et
l'utilisation du dispositif de commande (60) pour faire tourner le moyeu (51) autour de l'axe (510) du générateur de force donné (50) à la seconde fréquence, qui est une fréquence non de conception du système de cellule due à un dommage de l'aéronef, et pour entraîner un mouvement de la masse (53) le long de l'élément allongé (52) afin d'obtenir une nouvelle amplitude souhaitée de génération de force pour le générateur de force (50) (opération 73),
d'atténuer ou de réduire les vibrations de la cellule (12) à au moins une seconde fréquence.
